(19) Europäisches Patentamt

European Patent Office

Office européen des brevets

(11) **EP 2 958 226 A2**

(12) **EUROPEAN PATENT APPLICATION**

(43) Date of publication:
**23.12.2015 Bulletin 2015/52**

(51) Int Cl.:
***H02M 7/49*** (2007.01)

(21) Application number: **15169091.4**

(22) Date of filing: **25.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.06.2014 KR 20140069256**

(71) Applicant: **LSIS Co., Ltd.**
**Anyang-si, Gyeonggi-do 431-848 (KR)**

(72) Inventors:
• **Choi, Seung Cheol**
**430-812 Gyeonggi-do (KR)**
• **Yoo, Anno**
**157-918 Seoul (KR)**

(74) Representative: **Groth & Co. KB**
**P.O. Box 6107**
**102 32 Stockholm (SE)**

(54) **CASCADED H-BRIDGE INVERTER CAPABLE OF OPERATING IN BYPASS MODE**

(57)    A cascaded H-bridge inverter capable of operating in bypass mode is disclosed where a bypass function can be performed through control of power switch, instead of allowing each unit power cell forming a cascaded H-bridge inverter to use a separate bypass switch, and a cell driver controls each power switch in a freewheeling mode to allow a current inputted to any output terminal to flow other output terminals when bypass function is to be performed for relevant unit power cell, whereby a stable operation can be performed even if there is no bypass switch at each unit power cell, and a cost saving can be accomplished, because an additional bypass switch such as a MC (Magnetic Controller) is not used.

FIG.3

EP 2 958 226 A2

**Description**

BACKGROUND OF THE DISCLOSURE

Field

The teachings in accordance with the exemplary embodiments of this present disclosure generally relate to a cascaded H-bridge inverter, and more particularly to a cascaded H-bridge inverter capable of operating in bypass mode configured to perform a bypass function through control of power switch, instead of allowing each unit power cell forming a cascaded H-bridge inverter to use a separate bypass switch.

Background

In general, a medium voltage inverter is an inverter having an input power whose rms (root mean square) value is over 600V for a line-to-line voltage, and has several stages in output phase voltage. The medium voltage inverter is generally used to drive an industrial load of large inertia ranging from several kW to several MW capacities of, for a non-limiting example, fans, pumps, compressors, tractions, hoists and conveyors.

The medium voltage inverter largely uses a multilevel inverter configured to generate an output voltage more than 3-level. Particularly, a CHB (Cascaded H-bridge) inverter is largely used as a power shift device. The size and the number of inverter output voltage levels are determined by the number of unit power cells in the CHB inverter, where each unit power cell uses an insulated input voltage.

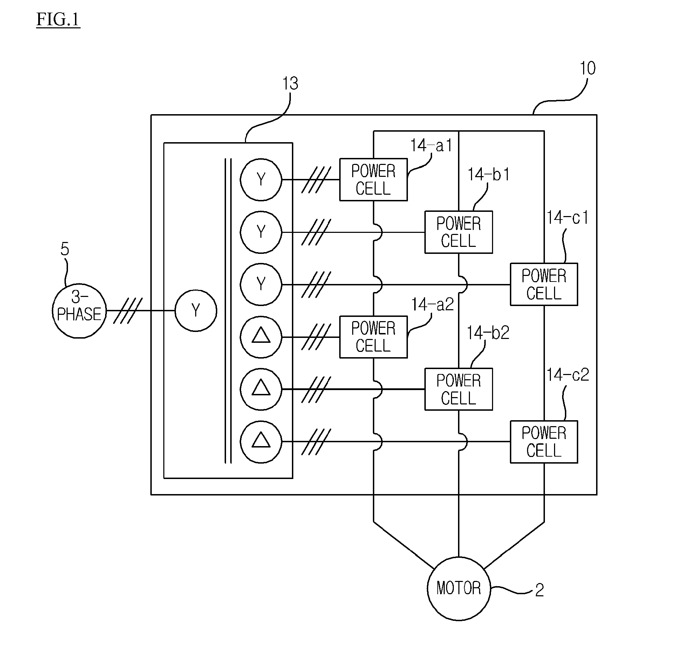

FIG. 1 is a circuit diagram illustrating an example of a CHB (Cascaded H-bridge) Inverter (10) formed with 2-stage unit power cell, where the number of unit power cells may be changed in response to the required system specification.

The CHB inverter (10) drives a motor (2) by receiving a 3-phase voltage (5) whose rms (root mean square) value is over 600V for a line-to-line voltage. The motor is a high voltage 3-phase motor and may be an induction motor or a synchronous motor.

A phase shift transformer (13) serves to insulate an input power, to shift a phase and a size of the voltage in response to requirement of unit power cell, and to improve a THD (Total Harmonic Distortion) of an input current through phase shift. Each unit power cell uses output voltages of the phase shift transformer (13) as input power, where the output voltages of the inverter are synthesized by a sum of voltages outputted by the unit power cells corresponding to each phase.

That is, a-phase output voltage is a sum of output voltages of serially connected unit power cells 14-a1 and 14-a2, b-phase output voltage is a sum of output voltages of serially connected unit power cells 14-b1 and 14-b2, and c-phase output voltage is a sum of output voltages of serially connected unit power cells 14-cl and 14-c2. Although size of each phase voltage in the synthesized output voltages of an inverter is same, each phase voltage has a 120-degree phase difference. Furthermore, the THD and voltage change rate of output voltage applied to a motor can be improved by increased number of unit power cells and various switching methods.

As discussed above, the CHB inverter is configured in a manner such that each phase is formed by serially connecting unit power cells, where a modularized structure using the unit power cells is easy in maintenance and repair.

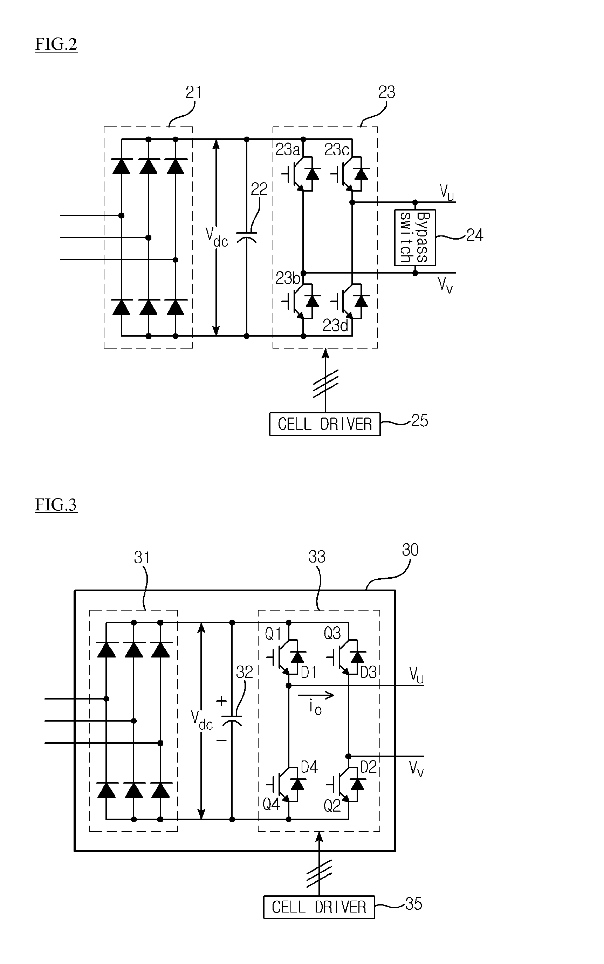

FIG. 2 is an example of unit power cell, where a rectifier (21) converts an AC (Alternating Current) voltage to a DC (Direct Current) voltage using 6 diodes, and size of a rectified DC terminal voltage (Vdc) is determined by a difference between an input terminal power and an output terminal power of the rectifier (21). When an input power supplied from a power source side is greater than an output power consumed by a load, a DC terminal voltage increases, and when an input power supplied from a power source side is smaller than an output power consumed by a load, a DC terminal voltage decreases.

A DC terminal capacitor (22) is used to solve an instantaneous power imbalance at input/output terminals, and a single phase full bridge inverter (23) synthesizes output voltages from the DC terminal voltage through each power switch (23a~23d). A cell driver (25) is independently used for each unit power cell, and generates gating signals for determining a power switching status of each power switch (23a~23d). A bypass switch (24) performs a bypass function.

That is, the bypass switch (24) short-circuits an output terminal of a relevant unit power cell when there occurs a failure in unit power cells of a medium voltage inverter using the CHB structure and turns off all power switches of a relevant unit power cell to prevent an arm short-circuit, whereby failures at some of the unit power cells are prevented from having an effect on motor operation. Although remaining unit power cells that normally operate can perform a continued operation to thereby improve reliability, it is impossible to avoid decreased output voltage and capacity.

Meantime, when there is no bypass switch (24) at the unit power cell, and the medium voltage inverter is continuously operated using the remaining normally operating unit power cells, the DC terminal voltage (Vdc) increases due to rectifying operation of inverse-parallel diodes at the power switch used by the failure-generated unit power cell, whereby a rated operation range of the DC terminal capacitor (22) is exceeded to damage the unit power cells and to disable an inverter operation resultantly.

Hence, each unit power cell is configured to include a bypass switch (24), but when a separate bypass switch (24) is used, disadvantages are generated where volume of a product increases and overhead increases due to increased costs.

## SUMMARY OF THE DISCLOSURE

The present disclosure is provided to solve the aforementioned disadvantages/problems and it is an object of the present disclosure to provide

a cascaded H-bridge inverter capable of operating in bypass mode configured to perform a bypass function through control of power switch, instead of allowing each unit power cell forming a cascaded H-bridge inverter to use a separate bypass switch.

In one general aspect of the present disclosure, there is provided a cascaded H-bridge inverter capable of operating in bypass mode, the cascaded H-bridge inverter comprises a plurality of unit power cells each corresponding to each phase, and a cell driver.

Preferably, but not necessarily, each unit power cell may include a rectifier configured to convert an AC voltage to a DC voltage, a DC terminal capacitor configured to charge the rectified voltage, first and fourth power switches serially connected across the DC terminal capacitor, and third and second power switches serially connected across the DC terminal capacitor. At this time, diodes may be formed in parallel across the first to fourth power switches to allow a current to flow in a reverse direction.

Preferably, but not necessarily, the cell driver may perform a bypass function in output terminals by controlling the first to fourth power switches.

Preferably, but not necessarily, the cell driver may control the first power switch and the third power switch in a turned-on state, and may control the fourth power switch and the second power switch in a turned-off state, whereby the bypass function can be performed.

Preferably, but not necessarily, the cell driver controls the fourth power switch and the second power switch in a turned-on state, and may control the first power switch and the third power switch in a turned-off state, whereby the bypass function can be performed.

## Advantageous Effects of the Disclosure

The present disclosure has an advantageous effect in that bypass function can be performed even by dispensing with a separate bypass switch, whereby a stable operation can be performed even if there is no bypass switch at each unit power cell, and a cost saving can be accomplished, because an additional bypass switch such as a MC (Magnetic Controller) is not used.

## Brief Description of Drawings

FIG. 1 is a circuit diagram illustrating an example of a CHB (Cascaded H-bridge) Inverter.
FIG. 2 is an example of unit power cell using a bypass switch.
FIG. 3 is an example of a unit power cell not using a bypass switch.
FIG. 4 is an example of operation waveform with respect to an inductive load.
FIG. 5 is a method of controlling a power switch for realizing a bypass function according to one exemplary embodiment of the present disclosure.
FIG. 6 is a method of controlling a power switch for realizing a bypass function according to another exemplary embodiment of the present disclosure.

## Detailed Description of the Disclosure

Various exemplary embodiments will be described more fully hereinafter with reference to the accompanying drawings, in which some exemplary embodiments are shown.

Referring to FIG. 3, each unit power cell (30) in a CHB inverter according to the present disclosure may include a rectifier (31), a DC terminal capacitor (32) and a single phase full bridge inverter unit (33), and may be operated by control of a cell driver (35).

The rectifier (31) may convert an AC voltage inputted from a phase shift transformer to a DC voltage and the DC terminal capacitor (32) may charge the voltage rectified by the rectifier (31). The size of a DC terminal voltage (Vdc) may be determined by a difference between an input power of the rectifier (31) and an output terminal power of the inverter. That is, when an input power supplied from a power source side is greater than an output power consumed by a load, a DC terminal voltage (Vdc) increases, and when an input power supplied from a power source side is smaller than an output power consumed by a load, a DC terminal voltage (Vdc) decreases.

The single phase full bridge inverter unit (33) may include a first power switch (Q1) and a fourth power switch (Q4) serially connected across the DC terminal capacitor (32), and a third power switch (Q3) and a second power switch (Q2) serially connected across the DC terminal capacitor (32), where output voltages are synthesized from the DC terminal voltage (Vdc) in response to control of the cell driver (35).

The cell driver (35) is independently formed at each unit power cell (30) to generate a gating signal configured to determine a power switching state for application to gate terminals of the first to fourth power switches (Q1~Q4).

The first to fourth power switches (Q1~Q4) may be formed by using switching elements turned on or turned off by receiving the gating signal of the cell driver (35), where diodes (D1~D4) are formed in parallel across the first to fourth power switches to allow a current to flow in a reverse direction.

An output voltage of the unit power cell (30) may be determined by voltage difference between Vu and Vv according to the following Equation 1.

$$【Equation\ 1】$$

$$V_o = V_u - V_v$$

where, $V_o$ is an output voltage of unit power cell, and $V_u$ and $V_v$ are pole voltages.

The first power switch (Q1) and the fourth power switch (Q4), and the third power switch (Q3) and the second power switch (Q2) perform complimentary switching operations by being alternately turned on and turned off, where pole voltage and output voltage of the unit power cell (30) are defined by switching states as indicated by the following Table 1.

[Table 1]

| Switching states | Pole voltages | | Output voltages |
|---|---|---|---|
| | Vu | Vv | ($V_o$) |
| Q1, Q2 On | $V_{dc}/2$ | $-V_{dc}/2$ | vdc |
| Q4, Q3 On | $-V_{dc}/2$ | $V_{dc}/2$ | -vdc |
| Q1, Q3 On | $V_{dc}/2$ | $V_{dc}/2$ | 0 |
| Q4, Q2 On | $-V_{dc}/2$ | $-V_{dc}/2$ | 0 |

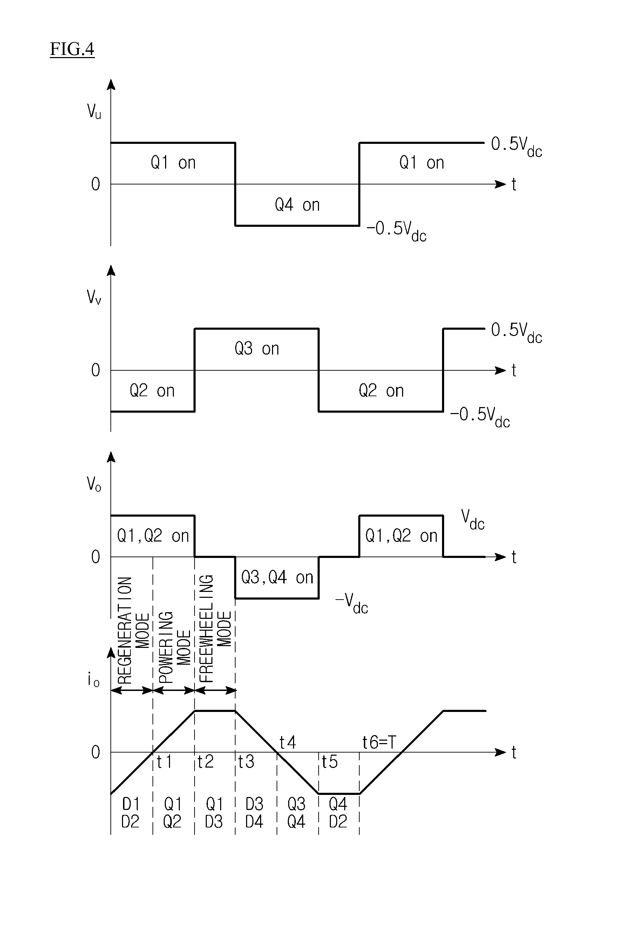

FIG. 4 is an example of operation waveform with respect to an inductive load that operates in a regeneration mode, a powering mode and a freewheeling mode.

Energy is transmitted to a load from the DC voltage power through the Q1 and Q2 under the powering mode, and the energy is returned to the DC poser side from the load through the diodes D1 and D2 under the regeneration mode. On the other hands, no energy transmission is generated between input/output of the inverter under the freewheeling mode.

The output voltage is $V_{dc}$ as shown in Table 1 during 0 ~ t2 when the first power switch Q1 and the second power switch Q2 are turned on. At this time, a load current($i_o$) at '$i_o$ < 0' section flows through the diodes D1 and D2. $i_o$ linearly increases by the output voltage, and a current flows through the Q1 and Q2 at 't = t1' when '$i_o$ > 0' starts.

When the second power switch Q2 is turned off at 't = t2' section, and the third power switch Q3 is turned on, the output voltage becomes 0V where the load current neither increases nor decreases, and freewheeled through D3 and Q1.

Furthermore, when the first power switch Q1 is turned off and the fourth power switch Q4 is turned on, the freewheeled current is switched to D3 and D4 and operated under regeneration mode. At this time, the output voltage is $-V_{dc}$, such that $i_o$ linearly decreases, and the current flows to a negative (-) direction from the moment of 't = t4'.

When the third power switch Q3 is turned off at 't = t5', and the second power switch Q2 is turned on, the current is freewheeled through D2 and Q4, and the load current maintains a predetermined negative value.

Now, a process of the cell driver (35) performing a bypass function of the unit power cell (30) will be explained.

The cell driver (35) functions to discourage the DC terminal voltage to rise by forming a path so as not to allow the load current to flow to the DC terminal power of the unit power cell (30) by controlling each power switch (Q1~Q4) when the bypass function is performed. That is, when the bypass function is performed, OV is outputted regardless of load current state to form a path of motor current.

First, the cell driver (35) controls the first power switch Q1 and the third power switch Q3 in a turned-on state, and controls the fourth power switch Q4 and the second power switch Q2 in a turned-off state, whereby the bypass function can be performed.

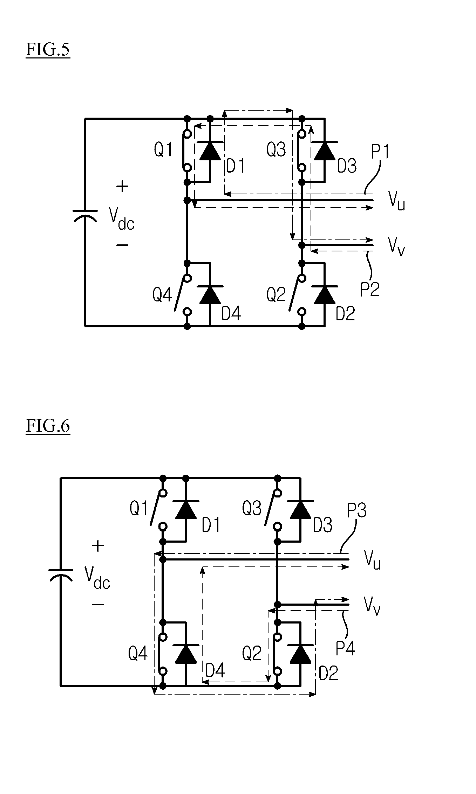

FIG. 5 is a method of controlling a power switch for realizing a bypass function thus discussed according to one exemplary embodiment of the present disclosure.

When the current ($i_o$) is in a negative (-) direction, a closed circuit is formed through D1 and Q3, and the current may flow to perform the bypass function (p1), and when the current ($i_o$) is in a positive (+) direction, a closed circuit may be formed through D3 and Q1, and the current may flow to perform the bypass function (p2).

Furthermore, the cell driver (35) may also control the fourth power switch Q4 and the second power switch Q2 in a turned-on state, and may control the first power switch Q1 and the third power switch Q3 in a turned-off state to perform the bypass function.

FIG. 6 is a method of controlling a power switch for realizing a bypass function thus discussed according to another exemplary embodiment of the present disclosure.

When the current ($i_o$) is in a negative (-) direction, a closed circuit is formed through D2 and Q4, and the current may flow to perform the bypass function (p3), and when the current ($i_o$) is in a positive (+) direction, a closed circuit may be formed through D4 and Q2, and the current may flow to perform the bypass function (p4).

The following Table 2 shows a summarized switched state in response to a load current when the bypass function is performed.

[Table 2]

| Current direction | Power element conductive under bypass operation |
|---|---|
| $i_o > 0$ | (1) D3 & Q1 On |
| | (2) Q2 & D4 On |
| $i_o < 0$ | (3) Q4 & D2 On |
| | (4) D1 & Q3 On |
| (1) and (4) in Table 2 show a switched state to turn on Q1 and Q3 according to an exemplary embodiment, and (2) and (3) show a switched state to turn on Q2 and Q4 according to an exemplary embodiment. | |

That is, it can be noted that the bypass function can be performed regardless of current direction.

An effect such as forming 0V by short-circuiting the output terminal can be accomplished where control of power switches alone can allow a load current to flow out regardless of current direction instead of flowing in the DC terminal power of the unit power cell (30), whereby the bypass operation can be performed that has no influence on operation of the medium voltage inverter.

Although the present disclosure has been described in detail with reference to the foregoing embodiments and advantages, many alternatives, modifications, and variations will be apparent to those skilled in the art within the metes and bounds of the claims. Therefore, it should be understood that the above-described embodiments are not limited by any of the details of the foregoing description, unless otherwise specified, but rather should be construed broadly within the scope as defined in the appended claims.

**Claims**

1. A cascaded H-bridge inverter capable of operating in bypass mode in which a rectifier (31) configured to convert an AC voltage to a DC voltage, a DC terminal capacitor (32) configured to charge the rectified voltage, and a unit power cell (30) including power switches (Q1~Q4) are serially connected to each phase in plural number, the cascaded H-bridge inverter, **characterized by** a cell driver (35) in response to each unit power cell, wherein the cell driver (35) controls the each power switch (Q1~Q4) to perform a bypass function in output terminals.

2. The cascaded H-bridge inverter of claim 1, **characterized in that** the unit power cell (30) includes a first power switch (Q1) and a fourth power switch (Q4) serially connected across the DC terminal capacitor (32), and a third power switch (Q3) and a second power switch (Q2) serially connected across the DC terminal capacitor (32), wherein diodes (D1~D4) are formed in parallel across the first to fourth power switches(Q1~Q4) to allow a current to flow in a reverse direction, and wherein the cell driver (35) controls the first power switch (Q1) and the third power switch (Q3) in a turned-on state, and controls the fourth power switch (Q4) and the second power switch (Q2) in a turned-off state to perform a bypass function.

3. The cascaded H-bridge inverter of claim 1, **characterized in that** the unit power cell (30) includes a first power switch (Q1) and a fourth power switch (Q4) serially connected across the DC terminal capacitor (32), and a third power switch (Q3) and a second power switch (Q2) serially connected across the DC terminal capacitor (32), wherein diodes (D1~D4) are formed in parallel across the first to fourth power switches (Q1~Q4) to allow a current to flow in a reverse direction, and wherein the cell driver (35) controls the fourth power switch (Q4) and the second power switch (Q2) in a turned-on state, and controls the first power switch (Q1) and the third power switch (Q3) in a turned-off state to perform a bypass function.

FIG.1

FIG.2

FIG.3

FIG.4

FIG.5

FIG.6